# EUROPEAN PATENT APPLICATION

(11) **EP 3 789 425 A1**
(43) Date of publication of application: **10.03.2021**
(21) Application number: 19196281.0
(22) Date of filing: 09.09.2019
(51) Int. Cl.: C08G 73/10, C08J 5/18, C08L 79/08, C09D 179/08, C09D 11/30

(54) **POLYMER LAYERS BY REACTIVE PRINTING**

(71) Applicant: Heraeus Deutschland GmbH & Co KG, 63450 Hanau (DE)
(72) Inventor: NEUMANN, Christian, 63450 Hanau (DE); MOTTWEILER, Jakob, 63450 Hanau (DE); BURSON, William C., Vandalia, OH 45377 (US); KOSEL, Björn, 63450 Hanau (DE); BRAND, Benjamin, 63450 Hanau (DE); BAUER, Stella Valery, 63450 Hanau (DE)
(74) Representative: Herzog IP Patentanwalts GmbH

(57) **Abstract**

The invention relates to a process of manufacturing a composite comprising a layer of a polyimide and a substrate, comprising at least these steps: i. Providing a first composition comprising an acid compound; and a second composition comprising a diamine compound; ii. Forming a first layer on the substrate, and iii. Forming a second layer on the first layer, wherein if the first layer is formed by applying the first composition, the second layer is formed by applying the second composition, and vice versa; wherein the first and the second layer overlap at least in part thereby forming a pattern on the substrate; iv. Conducting a thermal treatment on the pattern wherein the polyimide layer is formed. The invention further relates to such a composite, a kit comprising a first composition comprising an acid compound and a second composition comprising a diamine compound as well as a use of the kit.

## Description

The invention relates to a process of manufacturing a composite comprising a layer of a polyimide and a substrate, wherein the process comprises these steps: i. Providing a first composition comprising at least an acid compound; and a second composition comprising at least a diamine compound; ii. Forming a first layer on the substrate, wherein the first or the second composition can be applied; iii. Forming a second layer on the first layer, and possibly on the substrate, wherein if the first layer is formed by applying the first composition, the second layer is formed by applying the second composition, wherein if the first layer is formed using the second composition, the second layer is formed by applying the first composition; wherein the first and the second layer overlap at least in part thereby forming a pattern on the substrate; iv. Conducting a thermal treatment on the pattern wherein the polyimide layer is formed. The invention further relates to such a composite, a kit comprising a first composition comprising at least an acid compound and a second composition comprising at least a diamine compound and a use of the kit.

An approach to create insulating features on flexible substrates and on printed electronics, such as printed circuit boards, is to apply a layer of a polyamic acid, which is then converted into a polyimide layer by a thermal and/or chemical reaction. The polyamic acid, a prepolymer, is usually prepared from a bisanhydride component and a diamine component. Solutions of the polyamic acid prepolymer have high viscosities at higher concentration, for which reason, inkjet printing of poylamic acid can be conducted only at low polyamic acid concentrations in a printing ink. Accordingly, such a printing process requires huge amounts of organic solvents which either evaporate or need to be recollected and recycled. The organic solvents used in this process are often toxic, cancerogenic and/or mutagenic. Furthermore, storage lifetime of inks based on polyamic acid is limited. Another process relies on aqueous media for the manufacturing of the polyamic acid but requires an addition of monoamines like trimethylamine or ethanolamine to stabilize the polyamic acid solution. Removal of these monoamines prior to application of the polyamic acid in an inkjet ink requires high temperatures of more than 250 °C, and is thus costly.

In general terms, it is an object of the present invention to at least partly overcome at least one disadvantage known from the prior art.

Another object of the invention is to provide a process to create a polyimide layer on a substrate which avoids a need for temperatures of more than 300 °C to remove excessive and unwanted amines at any stage.

Another object is to provide a process to create a polyimide layer on a substrate which uses nontoxic, e.g. non-cancerogenic and non-mutagenic organic solvents.
Another object is to provide a process to create a polyimide layer where high amounts of polyimide can be applied to a substrate in one run.
Another object is to provide a process to create a polyimide layer where a thick layer of polyimide can be created on a substrate in one run.
Another object is to provide a process to create a polyimide layer using non-aqueous inks.
Another object is to provide a process in which printing pattern can be varied easily from substrate to substrate.
Another object is to provide a process which is fast and easy to use.
Another object is to provide a process which can be conducted at room temperature or only slightly elevated temperatures.
Another object of the present invention is to provide an easy to use way to supply an inkjet applicator with the inks required to prepare on a substrate a polyimide layer or a precursor thereof. Another object of the present invention is to provide concentrated inks for an inkjet applicator to manufacture polyimide layers.
Another object is to provide a composite comprising a substrate and a layer of polyimide, which composite, and in particular the polyimide layer is sturdy.
Another object is to provide a composite comprising a substrate and a layer of polyimide, which composite, and in particular the polyimide layer is thermally stable.

A contribution to achieving at least one of the objects above is made by the claims. A contribution to achieving at least one of the objects above is made by the following embodiments, the number of the embodiment being indicated between vertical bars.
|1| A process of manufacturing a composite comprising at least a layer of a polyimide and a substrate wherein the process comprises at least these steps:
   i. Providing
      a first composition comprising at least an acid compound and a first organic carrier; and
      a second composition comprising at least a diamine compound and a second organic carrier;
   ii. Forming a first layer on the substrate,
      wherein the first or the second composition can be applied;
   iii. Forming a second layer on the first layer, and possibly on the substrate, W
      herein if the first layer is formed by applying the first composition, the second layer is formed by applying the second composition,
      Wherein if the first layer is formed using the second composition, the second layer is formed by applying the first composition;
      Wherein the first and the second layer overlap at least in part thereby forming a pattern on the substrate;
   iv. Conducting a thermal treatment on the pattern wherein the polyimide layer is formed.
|2| The process of embodiment |1|, wherein at least one of the forming steps ii. and iii. comprises inkjet printing.
|3| The process of embodiment |1| or |2|, wherein the overlap between the first and the second layer is more than 75%, based on the total area on the substrate covered by either the first layer, the second layer or both layers.
|4| The process of any one of the preceding embodiments, wherein at least one further component is in the first composition, in the second composition or in both compositions.
|5| The process of any one of the preceding embodiments, wherein the first composition comprises an amount of acid compound in the range from 1 to 25 wt.%, based on the total amount of the first composition.
|6| The process of any one of the preceding embodiments, wherein the second composition comprises an amount of diamine compound in the range from 1 to 25 wt.%, based on the total amount of the second composition.
|7| The process of any one of the preceding embodiments, wherein the first or the second, or both organic carriers comprise at least a dipolar aprotic solvent.
|8| The process of any one of the preceding embodiments, wherein the amount of water in each, the first and the second composition is less than 1 wt.%, based on the total weight of the respective composition.
|9| The process of any one of the preceding embodiments, wherein the main component of each, the first and the second organic carrier is DMSO.
|10| The process of any one of the preceding embodiments, wherein the second organic carriers is identical in composition with the first organic carrier.
|11| The process of any one of the preceding embodiments, wherein at least one of the first composition and the second composition has a viscosity in the range from 3 to 100 mPa*s at 50 rpm, shear rate of 61.15/s and T = 20 °C, using a YULA-15E spindle in a ULA-31 EY chamber.
|12| The process of any one of the preceding embodiments, wherein at least one of the first composition and the second composition has a viscosity in the range from 1 to 100 mPa*s at 50 rpm, shear rate 61,15/s and T= 50 °C, using a YULA-15E spindle in a ULA-31 EY chamber.
|13| The process of embodiment |6|, wherein the dipolar aprotic solvent is selected from the group consisting of: Dimethylsulfoxide (DMSO), *N*-Methylpyrrolidone (NMP), *N,N-*Dimethylformamide (DMF), *N*,*N*-Dimethylacetamide (DMAc), *N,N,N',N'-*Tetramethylurea (TMU), Tetrahydrofurane and Acetonitril.
|14| The process of any one of the preceding embodiments, wherein the thermal treatment is conducted at a temperature in the range from 200 to 400 °C.
|15| The process of any one of the preceding embodiments, wherein a thermal pretreatment is conducted after step ii. or after step iii., or both.
|16| The process of embodiment |15|, wherein the thermal pretreatment is conducted at a temperature of up to 95% of the solvent boiling point, wherein the boiling point is given based on the Kelvin scale.
|17| The process of embodiment |15| or |16|, wherein the thermal pretreatment is conducted at a temperature in the range from 25 to 180 °C, for example in the range from 120 to 180 °C, or from 60 to 120 °C.
|18| The process of any one of the preceding embodiments, wherein at least one of the following features applies:
   a. the at least one diamine compound is selected from the group consisting of
      I. aliphatic diamines, such as Hexamethylenediamine (HMDA);
      II. aromatic diamines, such as 4,4'-(9-Fluorenylidene)dianiline (FDA), *p-*Phenylenediamine (PPDA), *m*-Phenylenediamine (MPDA), *m-*Xylylenediamine, *p*-Xylylenediamine, 2,2'-Bis(trifluoromethyl)benzidine (TFMB);
      III. ether diamines, such as 2,2-Bis[4-(4-aminophenoxy)phenyl]propane (BAPP), 2,2-Bis[4-(4-aminophenoxy)phenyl]hexafluoropropane, 4,4'-Oxydianiline (ODA), 4,4'-Bis(4-aminophenoxy)biphenyl;
      IV. sulfonyl diamines, such as 3,3'-Sulfonyldianiline;
      V. mixed, aliphatic-aromatic diamines, such as 4,4'-((Cyclohexane-1,1-diylbis(4,1-phenylene))bis(oxy))dianiline, 4,4'-(((4-Methylcyclohexane-1,1-diyl)bis(4,1-phenylene))bis(oxy))dianiline, Bis[4-(4-aminobenzyl)phenyl]methane, 1,1-Bis[4-(4-aminobenzyl)phenyl] cyclohexane, 3,3'-Methylenedianiline, 4,4'-Methylenedianiline; or
      VI. a combination of two or more of the compounds of same or different kind, according to the groups I., II., III., IV. and V.;
   b) the at least one acid compound is a polycarboxylic acid or a polycarboxylic anhydride, preferably selected from the group consisting of
      i. aromatic tricarboxylic polyacids and anhydrides, such as 3,4,4'-(Benzophenone)tricarboxylic anhydride (BTDA), trimellitic acid, trimellitic anhydride, phenylether tricarboxylic acid anhydride;
      ii. aromatic tetracarboxylic polyacids and anhydrides, such as 3,3'-4,4'-(Benzophenone)tetracarboxylic anhydride (BTDA), 4,4'-(Hexafluoroisopropylidene)diphthalic anhydride (6-FDA), Pyromellitic dianhydride (PMDA), 4,4'-Oxydiphtalic anhydride (ODPA), 3,3',4,4'-Biphenyltetracarboxylic dianhydride (BPDA), 3,3',4,4'-Diphenylsulfonetetracarboxylic dianhydride (DSDA), Hydroquinone diphthalic anhydride (HQDA), 4,4'-(4,4'-Isopropylidendiphenoxy) bis(phthalic anhydride);
      iii. aliphatic tetracarboxylic polyacids and anhydrides, such as Cyclobutane-1,2,3,4-tetracarboxylic dianhydride (CBDA), 3,3',4,4'-Bicyclohexyl tetracarboxylic dianhydride;
      iv. mixed, aliphatic-aromatic polyacids and anhydrides, such as Ethylene glycol bis(4-trimellitate anhydride);
      v. or a combination of two or more of the compounds of same or different kind, according to the groups i., ii., iii. and iv.;
   c) the substrate is selected from the group consisting of polyamide, polyimide, polyaramid, polytetrafluoroethylene, glass, metal, ceramics, Polyethyleneimine (PEI), Polyether ether ketone (PEEK);
      or a combination of two or more of these features.
|19| The process of any one of the preceding embodiments, wherein the molecular weight of both, the acid compound and of the diamine compound is less than 600 g/mol.
|20| The process of any one of the preceding embodiments, wherein the first composition is applied only once onto each spot of the pattern.
|21| The process of any one of the preceding embodiments, wherein the second composition is applied only once onto each spot of the pattern.
|22| The process of any one of the preceding embodiments, wherein the first composition and the second composition are applied only once onto each spot of the pattern.
|23| The process of any of the preceding embodiments, wherein the polyimide layer has at least one of these features:
   i) A thickness of at least 20 nm;
   ii) A weight average molecular weight of the polyimide in the range from 5'000 to 1'000'000 g/mol;
   iii) An ultimate tensile strength of 5 MPa or more, for example of 10 MPa or more, or 20 MPa or more, each determined according to ASTM DD-882-91;
      or a combination of two or more thereof.
|24| A kit, e.g. suited for ink-jet printing dielectric features on a substrate, comprising a first and a second composition, wherein
   the first composition comprises at least an acid compound and a first organic carrier; and
   the second composition comprises at least a diamine compound and a second organic carrier.
|25| The kit of embodiment |24|, wherein
   the amount of the acid compound in the first composition is in the range of from 1 to 25 wt.%, the wt.% with respect to the total weight of the first composition; and
   the amount of the diamine compound in the second composition is in the range of from 1 to 25 wt.%, the wt.% with respect to the total weight of the second composition.
|26| The kit of embodiment |24| or|25|, wherein at least one [pref. both] of the compositions has a viscosity in the range from 3 to 100 mPa*s at 50 rpm, shear rate of 61.15/s, and T = 20 °C, using a YULA-15E spindle in a ULA-31EY chamber.
|27| The process of any one of embodiments |1| to |23| using the kit of any one of embodiments |25| to |27|.
|28| A composite comprising a layer of polyimide and a substrate obtainable by a process according to any one of embodiments |1| to |23| or |27|, or by a process of any one of embodiments |24| to |26|.
|29| The composite of embodiment |28|, wherein the layer has at least one of these features:
   i) A thickness of at least 20 nm;
   ii) A weight average molecular weight of the polyimide in the range from 5'000 to 1'000'000 g/mol;
   iii) An ultimate tensile strength of 5 MPa or more, for example of 10 MPa or more, or 20 MPa or more, each determined according to ASTM DD-882-91;
      or a combination of two or more thereof.
|30| A use of a kit comprising a first and a second composition, each composition comprising an organic carrier, to manufacture a polyimide layer having a pattern, wherein the first composition further comprises at least an acid compound and the second composition comprises at least a diamine compound.
|31| The use of embodiment |30|, wherein the polyimide layer has a thickness of more than 20 nm.
|32| The use of embodiment |30| or |31|, wherein the first composition and the second composition are applied only once onto each spot of the pattern.

### GENERAL

Ranges mentioned in this description also include the values specified as limits. A range of the type "in the range from X to Y" in relation to a size A therefore means that A can assume the values X, Y and values between X and Y. Single sided limited ranges of the type "up to Y" for a size A are correspondingly interpreted as values Y and smaller than Y.

### DESCRIPTION OF THE INVENTION

A contribution to at least partial achievement of at least one of the above objects is made by the independent claims. The dependent claims provide preferred embodiments which contribute to at least partial achievement of at least one of the objects.

A first aspect is a process of manufacturing a composite comprising a layer of a polyimide and a substrate wherein the process comprises at least steps i., ii., iii. and iv.

A polyimide is a polymer where the repeat units of the polymer are connected by imide groups as linking groups. The term polyimide includes also polymers where some of the repeat units are connected by imide groups, and some other repeat units are connected by one or more other linking groups. Examples of other linking groups are ether groups, ester groups, sulfonyl groups, ketone groups and amid groups.

A polyimide can be manufactured by any way known to and considered suitable by a skilled person. Conventional reaction patterns are a) to conduct a reaction between a polyanhydride and a polyamine, and b) to conduct a reaction between a polyanhydride and a polyisocyanate, and c) to conduct a reaction using a molecule which comprises both, at least an anhydride and an amino functional group, or a molecule which comprises both, at least an anhydride and an isocyanato functional group, e.g. 5-isocyanato-1,3-dihydro-2-benzofuran-1,3-dione (CAS: 40139-36-4).

The prefix "poly" refers to the presence of two or more functional groups of the referred kind, i.e. polyisocyanate indicates that each molecule of the polyisocyanate has two or more, i.e. 3, 4, 5, 6 etc. isocyanate groups.

The repeat units of the polyimide may be all aromatic. Another embodiment includes polyimides in which one repeat unit is aromatic, and the other aliphatic. Examples of polyimides which comprise both, aromatic and aliphatic repeat units are the condensation products of an aromatic bisanhydride and an aliphatic diamine, or the condensation product of an aliphatic bisanhydride and an aromatic diamine.

The polyimide may contain one or more further linking groups, such as, e.g. ether groups, ester groups, sulfonyl groups, ketone groups, amid groups, or a combination of two or more thereof. Examples of these polyimides are Polyetherimides, polyesterimide and polyamideimides.

The substrate can be of any kind known to a skilled person and considered suitable in the present process and to manufacture the subject composite. Examples of suited substrates are materials selected from the group consisting of polyamide, polyimide, polyaramid, polytetrafluoroethylene, glass, metal, ceramics, Polyethyleneimine (PEI), Polyether ether ketone (PEEK); and combinations thereof. In terms of combinations, it is understood that this may refer to a composite of two or more materials, that is an arrangement where layers of two different materials overlap layer by layer. Further combinations thereof may also refer to substrates where two or more materials are adjacent side by side. Moreover, even a combination is perceivable where two or more layers overlap layer by layer but also at least one layer is made by two or more materials arranged side by side.

Step i. comprises providing of a first composition comprising at least an acid compound and a first organic carrier; and a second composition comprising at least a diamine compound and a second organic carrier.

Providing in the present context can be of any kind known to a skilled person and considered suitable in the present process and/or for the subject first or second composition.

In an embodiment, at least one of the first composition and the second composition, preferably both, the first and the second composition have a viscosity in the range from 3 to 100 mPa*s at 50 rpm, shear rate of 61.15/s, T = 20 °C, and a measurement period of 60 seconds. The viscosity can be measured using a Brookfield DX3TLVKJ0 viscometer equipped with a 75 ml ULA-31EY sample chamber using a YULA-15E spindle (all measurement equipment available from Brookfield Engineering Labs, Inc.). The temperature can be controlled using an external thermostat. Calibration of the viscosimeter can be done using calibration standards for Newtonian liquids from "Zentrum fur Messen und Kalibrieren & Analtytik GmbH, DAkks-registration no. D-K-15186-01-00. (DAkks is the national accreditation body for Germany.).

In a further embodiment, at least one of the first composition and the second composition, preferably both, the first and the second composition, have a viscosity in the range from 1 to 100 mPa*s at 50 °C. The measurement was performed as before, but at 50 °C.

The molar amount of carboxylic acid groups in the first composition and the molar amount of amine groups in the second composition can be about 2:1, e.g. in the range from1.8:1.2 to 2.2:0.8 or from 1.9:1.1 to 2.1:0.9. Anhydride groups count as two carboxylic groups.

The first composition comprises at least one acid compound which can be of any kind known to and considered suitable for conducting the present process by a skilled person. The acid compound can be a polycarboxylic acid or an anhydride thereof. Examples thereof are dicarboxylic, tricarboxylic and tetracarboxylic acids and anhydrides thereof. The acid compound may be aromatic, cycloaliphatic or aliphatic, or mixed, such as aliphatic-aromatic, yet preferred aromatic. More specific examples of acid compound are aromatic tricarboxylic polyacids and anhydrides, aromatic tetracarboxylic polyacids and anhydrides, aliphatic tetracarboxylic polyacids and anhydrides, and mixed aliphatic-aromatic polyacids and anhydrides. The acid compound can be a mixture of two or more of these. Moreover, the acid compound can comprise other so-called "activated acid groups", such as acid chlorides and active esters.

The first composition may comprise a total of one or more acid compounds in an amount in the range from 1 to 25 wt.%, e.g. from 10 to 25 wt.%, or from 15 to 25 wt.%, each based on the total amount of the first composition. The remainder of the first composition is, as described before, organic carrier and auxiliaries.

### Examples of suited polycarboxylic acids and polycarboxylic acid anhydrides are

i. Aromatic tricarboxylic polyacids and anhydrides, such as 3,4,4'-(Benzophenone)tricarboxylic anhydride (BTDA), trimellitic acid, trimellitic anhydride, phenylether tricarboxylic acid anhydride,
ii. Aromatic tetracarboxylic polyacids and anhydrides, such as 3,3'-4,4'-(Benzophenone)tetracarboxylic anhydride (BTDA), 4,4'-(Hexafluoroisopropylidene)diphthalic anhydride (6-FDA), Pyromellitic dianhydride (PMDA), 4,4'-Oxydiphtalic anhydride (ODPA), 3,3',4,4'-Biphenyltetracarboxylic dianhydride (BPDA), 3,3',4,4'-Diphenylsulfonetetracarboxylic dianhydride (DSDA), Hydroquinone diphthalic anhydride (HQDA), 4,4'-(4,4'-Isopropylidendiphenoxy) bis(phthalic anhydride),
iii. Aliphatic tetracarboxylic polyacids and anhydrides, such as Cyclobutane-1,2,3,4-tetracarboxylic dianhydride (CBDA), 3,3',4,4'-Bicyclohexyl tetracarboxylic dianhydride,
iv. Mixed, aliphatic-aromatic polyacids and anhydrides, such as Ethylene glycol bis(4-trimellitate anhydride), or
v. a combination of two or more of the compounds of same or different kind, according to the groups i., ii., iii. and iv.

The second composition comprises at least one diamine compound which can be of any kind known to and considered suitable for conducting the present process by a skilled person. The diamine compound may be aromatic, cycloaliphatic or aliphatic. The diamine may comprise at least a further functional group linking the amine functionalities, such as e.g. ether or ester groups. An example of an ether group containing aromatic diamine is 4,4'-Oxydianiline. More specific examples of acid compound are aliphatic diamines, aromatic diamines, ether diamines, sulfonyl diamines, mixed, aliphatic-aromatic diamines. The diamine compound can comprise a mixture of two or more of above mentioned diamine compounds.

The second composition may comprise a total of one or more diamine compounds in an amount in the range from 1 to 25 wt.%, e.g. from 10 to 25 wt.%, or from 15 to 25 wt.%, each based on the total amount of the second composition. The remainder of the second composition is, as described before, organic carrier and auxiliaries.

### Examples of suited diamine compounds are

I. Aliphatic diamines, such as Hexamethylenediamine (HMDA),
II. Aromatic diamines, such as 4,4'-(9-Fluorenylidene)dianiline (FDA), *p*-Phenylenediamine (PPDA), *m*-Phenylenediamine (MPDA), *m*-Xylylenediamine, *p*-Xylylenediamine, 2,2'-Bis(trifluoromethyl)benzidine (TFMB),
III. Ether diamines, such as 2,2-Bis[4-(4-aminophenoxy)phenyl]propane (BAPP), 2,2-Bis[4-(4-aminophenoxy) phenyl]hexafluoropropane, 4,4'-Oxydianiline (ODA), 4,4'-Bis(4-aminophenoxy)biphenyl,
IV. Sulfonyl diamines, such as 3,3'-Sulfonyldianiline,
V. mixed, aliphatic-aromatic diamines, such as 4,4'-((Cyclohexane-1,1-diylbis(4,1-phenylene))bis(oxy))dianiline, 4,4'-(((4-Methylcyclohexane-1,1-diyl)bis(4,1-phenylene))bis(oxy))dianiline, Bis[4-(4-aminobenzyl)phenyl] methane, 1,1-Bis[4-(4-aminobenzyl)phenyl] cyclohexane, 3,3'-Methylenedianiline, 4,4'-Methylenedianiline, or
VI. a combination of two or more of the compounds of same or different kind, according to the groups I., II., III., IV. and V.

In a preferred embodiment of the first aspect, the molecular weight of the acid compound, the molecular weight of the diamine compound, or of each of both compounds is less than 600 g/mol.

Both, the first and the second composition further comprise an organic carrier. The first composition comprises a first organic carrier and the second composition a second organic carrier. Both, the first and the second organic carrier can be the same or different. In an embodiment, the first and the second organic carrier are composed identically and thus, are the same. In another embodiment, the first and the second organic carrier are composed of the same components but the quantitative composition of the second organic carrier is different from the quantitative composition of the first organic carrier.

A suited organic carrier in the present context is a liquid, at least at a temperature over the range from 20 to 60 °C, which comprises one or more organic solvents. The organic carrier can be of any kind or a combination of any two or more organic solvents which are known to and considered suitable for conducting the present process by a skilled person.

In an embodiment the organic carrier is a composition comprising at least one polar solvent. In a further embodiment, at least one of the polar solvents in the organic carrier is aprotic.

Examples of dipolar aprotic solvents are Dimethylsulfoxide (DMSO), *N*-Methylpyrrolidone (NMP), *N*,*N*-Dimethylformamide (DMF), *N*,*N*-Dimethylacetamide (DMAc), *N*,*N*,*N*',*N*'-Tetramethylurea (TMU), Tetrahydrofurane and Acetonitril.

In a further embodiment, the organic carrier can comprise a combination of two or more dipolar aprotic solvents.

In a further embodiment the organic carrier is a composition comprising at least one of the mentioned dipolar aprotic solvents and at least a further solvent. The at least one further solvent can be of any kind known to and considered suitable for conducting the present process by a skilled person.

The at least one further solvent can be non-polar, and further aliphatic. Preferred non-polar aliphatic solvents are found in the group of alkanes and cycloalkanes, in particular those having 6 or more carbon atoms per molecule. Examples of non-polar aliphatic solvents are hexane, heptane, octane, nonane, decane, cyclohexane, cycloheptane. Combinations of two or more thereof can be employed. Aliphatic and cyclic ketones and ethers are also non-polar aliphatic solvents and preferred when having 4, 5, 6 or more carbon atoms per molecule.

The at least one further solvent can also comprise aromatic and/or halogenated solvents, such as nitrobenzene, benzonitrile, *α*-chloronaphthalene, *o*-dichlorobenzene, toluene and phenolic solvents such as m-cresol.

In a further embodiment, the organic carrier comprises at least 20 wt.%, for example in the range from 20 wt.% to 100 wt.-%, that is more than 30, 40, 50, 60, 70 or 80 wt.% of one or more dipolar aprotic solvents, based on the total weight of the organic carrier. It was found that conditions are less preferred for the manufacture of the composite comprising a polyimide layer, if the organic carrier amounts to less than 50 wt.-% of a composition, e.g. the first or second composition. Potentially suited solvents are as described above. Preferred solvents composing the organic carrier are dimethyl sulfoxide (DMSO), *N*-methyl-2-pyrrolidone (NMP), *N*,*N*-dimethylformamide (DMF) and *N*,*N*-dimethylacetamide (DMAc), *N*,*N*,*N'*,*N'*-tetramethylurea (TMU), tetrahydrofurane and acetonitril; or a combination thereof.

The organic carrier may comprise up to 80 wt.%, for example in the range from 0 to 80 wt.-%, that is at most 70, 60, 50, 40, 30 or 20 wt.-% of at least one further solvent, based on the total weight of the organic carrier, e.g. one or more non-polar aliphatic solvents, as mentioned before. An example of a suited non-polar aliphatic solvent is cycloheptanone.

The organic carrier may further comprise up to 25 wt.-%, e.g. up to 15 wt.-%, or up to 10 wt.-% of further components, the wt.-% based on the total weight of the organic carrier. The further components can be of any kind and different from the ones described before. Examples of the further components are impurities, but also auxiliaries, e.g. antioxidants, crosslinkers, nanoparticles of silica and the like.

There is usually little to no water present in the organic carrier. In an embodiment, the organic carrier comprises less than 1 wt.%, e.g. less than 1.000 ppm of water. Very often, the organic carrier contains no water at all. The amount of water in wt.-% or ppm is determined with respect to the total weight of the organic carrier under consideration. The amount of water is determined according to ASTM E203-16 using a Deutsche METROHM KF Coulometer 899 titration system (Karl Fisher Titration).

The sum of all wt.% of components that form the organic carrier is always 100 wt.%. So, if an embodiment calls for 20 wt.% of dipolar aprotic solvent, the remainder to 100 wt.%, that is 80 wt.%, is formed by other components, such as non-polar aliphatic solvents, impurities, auxiliaries or other.

In step ii. a first layer is formed on the substrate. The first layer can be formed by application of either the first composition or the second composition onto the substrate. However, it may also be advantageous to apply onto the surface of the substrate a primer before the first or the second composition is applied in order to improve the adhesion of the polyimide layer on the substrate.

Application of the - either first or second - composition to the substrate in step ii. can be performed using any kind of application technique known and considered suited in the present process by a skilled person. For example, application to the substrate can be performed by a technique selected from the group consisting of inkjet printing, coating with a doctor blade, roll coating, screen printing, spray coating, spin coating, flexo printing, gravure printing, tampon printing.

The first layer may be fixated after step ii., as an option. Fixation can be performed by at least partial removal of the first organic carrier. If the first organic carrier is composed of two or more components, removal or only one or some of the components may also lead to fixation of the first layer comprising the first composition. The partial or complete removal of the first organic carrier can be conducted by evaporation, e.g. through heating the substrate, heating the first layer, ventilation through an air current, etc. to the first layer.

In step iii., a second layer is formed on the first layer, and possibly on the substrate. If the first layer was formed by applying the first composition, then the second layer is formed by applying the second composition. However, if the first layer was formed using the second composition, the second layer is formed by applying the first composition. Application of a composition in step iii. can be performed e.g. by using one of the techniques described with the application in step ii. The application in step iii. may be performed by the same technique as the application in step ii., or by a different technique. The same technique as in step ii. can be used, e.g. inkjet printing.

Throughout both steps, step ii. and step iii., the same technique may be used. Another embodiment refers to using different techniques for forming a layer on a substrate.

Application according to step iii. produces areas on the substrate, where the first and the second layer overlap at least in part. As a result, the second layer is positioned at least in part on top of the first layer. The overlap regions of the first and second layer form a pattern on the substrate. The pattern in the present context refers solely to the areas on the substrate where the overlap regions are. The pattern, and later the inventive polyimide layer is formed in the overlap regions of the first layer with the second layer. It may not be necessary to provide the diamine compound and the acid compound in the overlap regions in close-to or exactly equimolar amounts. But it was found of advantage to provide the amine groups of the second composition and the carboxylic acid groups of the first composition in close-to or exactly an molar amount of 1:2. Higher molecular weights of the polyimide in the polyimide layer can be obtained by observing such molar relation.

In another embodiment of the first aspect, the overlap between the first and the second layer is more than 75%, e.g. more than 80%, or more than 90%, or more than 95%, based on the total area on the substrate covered by either the first, the second layer, or a superposition of both layers. Often, the overlap is up to 98%, 99% or even 100%, based on the total area on the substrate covered by either the first, the second layer, or a superposition of both layers.

In an embodiment of the process, a thermal pretreatment can be conducted prior to performing step iv. The thermal pretreatment may be conducted at a temperature of up to 95% of the solvent boiling point, wherein the boiling point is given based on the Kelvin scale. The %-value refers to the value of the boiling point. If the combined organic carriers comprise two or more solvents, then the %-value refers to the boiling point of that solvent of the organic carriers which has the lowest boiling point. Generally spoken, the thermal pretreatment can be performed in a manner similar to or identical with the optional fixation step after step ii.

The process of the invention further includes step iv., which is conducting a thermal treatment on the pattern. By this thermal treatment, a polyimide layer is formed. The forming occurs where layer 1 and layer 2 overlap, that is composition 1 and composition 2 are in direct contact. Further, the polyimide layer is in direct connection with the substrate, whereby the composite comprising the substrate and a layer of polyimide is obtained.

In an embodiment of step iv., the thermal treatment is conducted at temperature in the range from 25 to 180 °C, for example, in the range from 120 to 180 °C, or from 60 to 120 °C.

During the thermal treatment, residual organic carrier, such as solvents are removed, e.g. by evaporation. The thermal treatment can be conducted by heating the substrate, e.g. on a hot plate, or in an oven, into which the coated substrate is inserted. The thermal treatment can be conducted at the operational temperature for a period from 0.1 to 60 minutes, e.g. 0.5 to 30 minutes, or from 1 to 5 minutes. In addition, thereto, an infrared or ultraviolet co-treatment can be conducted. In this event, IR- or UV-irradiation is applied to the substrate and the layers, in addition to the thermal treatment of step iv.

The polyimide in the layer obtained by the process of the first aspect may have a weight average molecular weight of 5'000 g/mol or more, 10'000 g/mol or more, 50'000 g/mol or more, or 100'000 g/mol or more. It usually does not exceed 500'000 g/mol, or 1'000'000 g/mol at most. A preferred range of weight average molecular weight of the polyimide layer can be, for example, in the range from 5'000 to 1'000'000 g/mol, or from 10'000 to 100'000 g/mol, or from 50'000 to 500'000 g/mol.

In another embodiment, the polyimide layer may have a thickness of at least 20 nm. The thickness is determined perpendicular to the contact area which is formed by the polyimide layer and the substrate. The thickness can be determined by making a scratch through a sample of the composite, where the surface resulting from the scratch is examined by profilometry using a Bruker Dektak XT-E Taktiles Profilometer, radius of the stylus: 12.5µm.

A second aspect of the invention is a kit which comprises a first and a second composition, wherein the first composition comprises at least one acid compound and a first organic carrier; and the second composition comprises at least one diamine compound and a second organic carrier.

The kit may be particularly useful for ink-jet printing, e.g. to print a precursor pattern. Such precursor pattern may be converted into dielectric features by a treatment, e.g. by a treatment with irradiation, e.g. heat.

The first and second composition and its constituents, e.g. the at least one acid compound, the first organic carrier, the diamine compound and the second organic carrier can be of the same kind as described in relation to the first aspect of the invention. So, embodiments described with regard to the first aspect of the invention are also preferred in the second aspect, in particular when referring to features and constituents related to the first or the second composition.

Both, the first and the second organic carrier can be the same or different. In an embodiment, the first and the second organic carrier are composed identically and thus, are the same. In another embodiment, the first and the second organic carrier are composed by the same components but the quantitative composition of the second organic carrier is different from the quantitative composition of the first organic carrier.

In another embodiment, the kit may comprise an amount of the acid compound in the first composition in the range of from 1 to 25 wt.%, the wt.% with respect to the total weight of the first composition. The kit may also comprise an amount of the diamine compound in the second composition in the range of from 1 to 25 wt.%, the wt.% with respect to the total weight of the second composition.

Each, the first and the second composition of the kit may have, independently from the other one, a viscosity in the range from 3 to 100 mPa*s at a temperature of 20 °C. Further, both, the first and the second composition may have such viscosity. The measurement was performed as described before.

Each, the first and the second composition of the kit may have, independently from the other one, a viscosity in the range from 1 to 100 mPa*s at a temperature of 50 °C. Further, both, the first and the second composition may have such viscosity. The measurement was performed as described before.

Another embodiment of the first aspect is the process which uses the kit of the second aspect or one of its embodiments.

A third aspect is a composite comprising a layer of polyimide and a substrate obtainable by a process according to the first aspect or one of its embodiments. For example, the kit of the second aspect and its embodiments can be employed to work the process of the first aspect to obtain the composite of the third aspect.

A fourth aspect is a use of a kit comprising a first and a second composition, each comprising an organic carrier, to manufacture a polyimide layer, wherein the first composition comprises acid compounds and the second composition comprises diamine compounds.

The first and second composition and its constituents, e.g. the at least one acid compound, the first organic carrier, the diamine compound and the second organic carrier can be of the same kind as described in relation to the first aspect of the invention. So, embodiments described with regard to the first aspect of the invention are also preferred in the fourth aspect, in particular when referring to features and constituents related to the first or the second composition. Likely, the kit of the fourth aspect can be of the same kind as described in relation to the second aspect. Embodiments of the second aspect are also preferred with the fourth aspect.

In an embodiment, the polyimide layer may have a thickness of at least 20 nm. The thickness is determined perpendicular to the contact area between the polyimide layer and the substrate. The thickness can be determined by making a cut through a sample of the composite, where the surface resulting from the cut is examined by Scanning electron microscopy.

In another embodiment, the polyimide layer having a thickness of at least about 20 nm is manufactured so that the first composition and the second composition are applied only once onto each spot of the pattern. Accordingly, the pattern consists of a plurality of spots, wherein each spot comprises a superposition of the first composition and the second composition. No further layer comprising either the first composition or the second composition is superimposed on a spot. Accordingly, a layer of the described thickness can be prepared with only one printing iteration. This is in advantage over known techniques which usually need more than one iteration of printing and layer forming to achieve such a layer thickness. For example, the known art applies a polyimide forming ink several times superimposing on the same spot of substrate to achieve the desired thickness of at least about 20, 25 or 50 nm.

A fifth aspect is a use of a process as described in the first aspect, wherein a polyimide layer having a thickness of at least about 20 nm, e.g. 25 nm, or at least about 50 nm, which is obtained in a single printing step. This is in advantage of known techniques which usually need more than one printing and layer forming iteration to achieve such a layer thickness.

### SUMMARY OF THE FIGURES

The invention is now further elucidated with reference to the figures. The figures and figure descriptions are exemplary and are not to be considered as limiting the scope of the invention. The figures and descriptions focus on the features of the process relating to the invention and are not intended to be a comprehensive description of already established processes. The skilled person is aware of the technical details required to implement parts of the process which fall outside the focus of the invention, such as standard processes for distillation, phase separation and drying.
- Figure 1: shows the process of manufacture according to the first aspect.
- Figure 2: shows a kit, as in the second aspect.
- Figure 3: shows a composite, side view, as in the third aspect.
- Figure 4: shows a top view of a first (or second) composition printed with an inkjet.
- Figure 5: shows a top view of a superimposed first (straight) and second (dashed) composition, which overlap in part.
- Figure 6: shows another top view of a superimposed first (straight) and second (dashed) composition which overlap in part.

### DESCRIPTION OF THE FIGURES

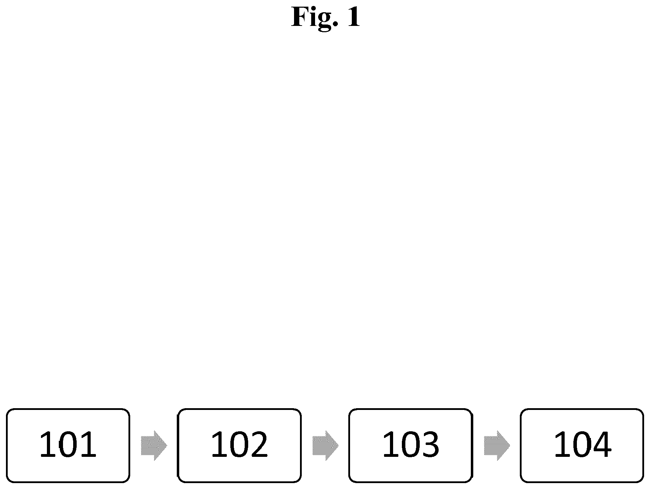

Figure 1 shows a process according to the first aspect which is a process of manufacturing a composite comprising a layer of a polyimide and a substrate wherein the process comprises at least: step i. **101** providing a first composition comprising an acid compound and a first organic carrier, and a second composition comprising a diamine compound and a second organic carrier; step ii. **102** forming a first layer on the substrate, wherein the first or the second composition can be applied; step iii. **103** forming a second layer on the substrate. If the first layer is formed by applying the first composition, then the second layer is formed by applying the second composition. However, if the first layer is formed using the second composition, the second layer is formed by applying the first composition. The first and the second layer overlap at least in part thereby forming a pattern on the substrate; step iv. **104** conducting a thermal treatment on the pattern wherein the polyimide layer is formed.

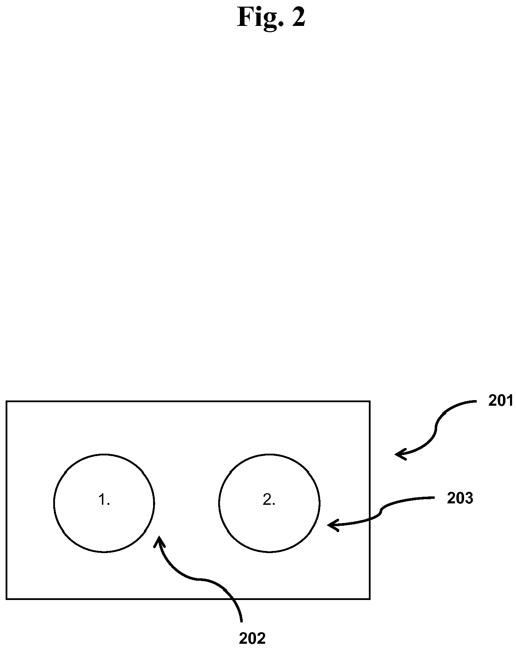

Figure 2 shows a kit **201** comprising a first **202** and a second **203** composition.

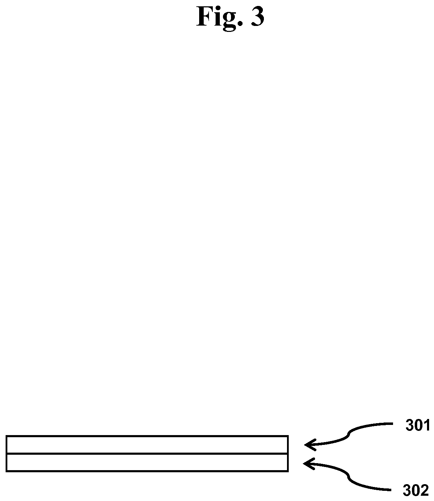

Figure 3 shows a composite comprising a substrate **302** and a layer of polyimide **301.**

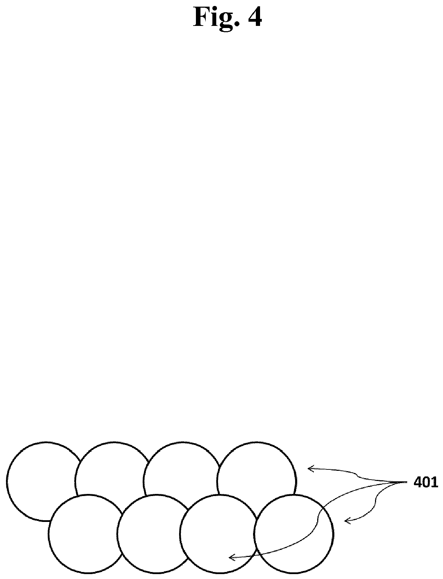

Figure 4 shows an example of a first layer **401.**

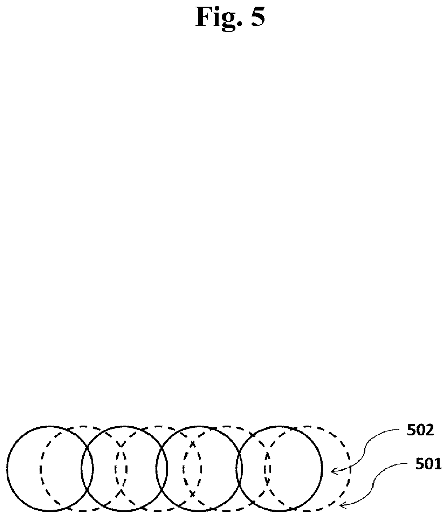

Figure 5 shows an example of a first layer **501** and a second layer **502,** which overlap in part. Only the overlapping regions can polymerize to provide the precursor polymer of the polyimide layer.

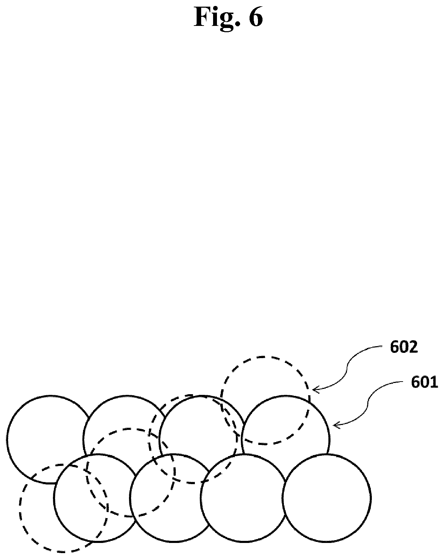

Figure 6 shows another example of a first layer **601** and a second layer **602,** which overlap in part. Only the overlapping regions can polymerize to provide the precursor polymer of the polyimide layer.

### TEST METHODS

The following test methods were used for the purposes of the invention. Unless otherwise stated the measurements were made at ambient temperature 23°C, ambient air pressure 100 kPa (0.986 atm) and relative humidity 50%.

### a. Viscosity

The viscosity was measured using a Brookfield DX3TLVKJ0 viscometer. 20 ml of a probe composition were poured into a 75ml ULA-31EY sample chamber using a YULA-15E spindle (all measurement equipment available from Brookfield Engineering Labs, Inc.). The measurements were conducted at a speed of 50 rpm, a shear rate of 61.15/s and a measurement time of 60 seconds. The temperature of (either 20°C or 50°C, as indicated) was controlled using an external thermostat. Calibration of the viscosimeter was done using calibration standards for Newtonian liquids from "Zentrum fur Messen und Kalibrieren & Analtytik GmbH, DAkks-registration no. D-K-15186-01-00. (DAkks is the national accreditation body for Germany.)

### b. Water

The content of water in a composition was determined using a Deutsche METROHM KF Coulometer 899 titration system and according to ASTM E1064-08.

### c. Thickness

Thickness of a polyimide layer was determined be analyzing the difference in height in a direction perpendicular to a substrate on which a layer of polyimide is positioned. For this purpose, a cut is made through the layer of polyimide and the layer is removed from the substrate on one side of the cut. A Dektak XT-E with a cutting tip of 12.5 µm was used to determine the difference in thickness.

### d. Molecular weight

Average weight number molecular weight (*M̅_̅{̅w̅}̅*) of polyimide was determined by GPC using a PSS SECcurity² GPC System equipped with one PSS GRAM 10 µm 30 Å 8x300 mm and two PSS GRAM 10 µm 1000Å 8x300 mm GPC columns with a PSS GRAM 10 µm 8x50 mm precolumn. DMSO with 5 g/L LiCl was used as GPC eluent with a flow of 1 ml/min. GPC samples were prepared by dissolving 40 mg of the corresponding polyamic acid substrates in 1.5 ml of DMSO with 5 g/L LiCl and filtering them with 0.45 µm PTFE syringe filter. External calibration was performed with PSS PMMA standards. The elugrams were interpreted utilizing the detector response of the RI detector.

### e. Ultimate tensile strength

The ultimate tensile strength was measured according to ASTM D-882-91.

### EXAMPLES

The invention is now further described with the aid of examples. These examples are for illustrative purposes and are not to be considered as limiting the scope of the invention.

10 mmol of 3,3'-4,4'-(Benzophenone)tetracarboxylic anhydride (BTDA) was dissolved in DMSO to generate a first 10 wt% ink solution. Further, 4,4'-(9-Fluorenylidene)dianiline (FDA) was dissolved in DMSO to generate a second ink solution of equal concentration. Each ink solution had a viscosity of 3 mPas at 20°C and a water content of less than 0.05 wt.%. The first ink solution was printed using a Fuji Dimatix printer with 1270 dpi on a glass substrate at room temperature forming a first layer. Subsequently, the second ink solution was printed forming a second layer on top of the first layer. Upon completion of the printing, the layer was cured at 230 °C for 30 minutes to form polyimide. A cut was made through the foil using a cutter knife. The thickness of the polyimide layer was then analyzed using the profilometer, as described in the test method. The thickness of the polyimide layer was 5 µm.

The polyimide layer had an ultimate tensile strength of 13 MPa, measured according to ASTM D-882-91.

**REFERENCE NUMERALS**

| | |
|---|---|
| 101 | Step i. |
| 102 | Step ii. |
| 103 | Step iii. |
| 104 | Step iv. |
| 201 | Kit |
| 202 | Composition 1 |
| 203 | Composition 2 |
| 301 | Polyimide layer |
| 302 | Substrate |
| 401 | First layer |
| 501 | First layer |
| 502 | Second layer |
| 601 | First layer |
| 602 | Second layer |

## Claims

1. A process of manufacturing a composite comprising at least a layer of polyimide and a substrate wherein the process comprises at least these steps:
i. Providing
a first composition comprising at least an acid compound and a first organic carrier; and
a second composition comprising at least a diamine compound and a second organic carrier;
ii. Forming a first layer on the substrate,
wherein the first or the second composition can be applied;
iii. Forming a second layer on the first layer,
Wherein if the first layer is formed by applying the first composition, the second layer is formed by applying the second composition,
Wherein if the first layer is formed using the second composition, the second layer is formed by applying the first composition;
Wherein the first and the second layer overlap at least in part thereby forming a pattern on the substrate;
iv. Conducting a thermal treatment on the pattern wherein the polyimide layer is formed.

2. The process of claim 1, wherein at least one of the forming steps ii. and iii. comprises inkjet printing.

3. The process of claim 1 or 2, wherein the first composition comprises an amount of acid compound in the range from 1 to 25 wt.%, based on the total amount of the first composition.

4. The process of any one of the preceding claims, wherein the second composition comprises an amount of diamine compound in the range from 1 to 25 wt.%, based on the total amount of the second composition.

5. The process of any one of the preceding claims, wherein the first or the second, or both organic carriers comprise at least an dipolar aprotic solvent.

6. The process of claim 5, wherein the dipolar aprotic solvent is selected from the group consisting of: Dimethylsulfoxide (DMSO), *N*-Methyl-2-pyrrolidone (NMP), *N,N-*Dimethylformamide (DMF), *N*,*N*-Dimethylacetamide (DMAc), *N*,*N*,*N*',*N*'-Tetramethylurea (TMU), Tetrahydrofurane and Acetonitril.

7. The process of any one of the preceding claims, wherein the thermal treatment is conducted at a temperature in the range from 200 to 400°C.

8. The process of any one of the preceding claims, wherein a thermal pretreatment is conducted on the pattern.

9. The process of any one of the preceding claims, wherein at least one of the following features applies:
a) the at least one diamine compound is selected from the group consisting of
I. aliphatic diamines, such as Hexamethylenediamine (HMDA);
II. aromatic diamines, such as 4,4'-(9-Fluorenylidene)dianiline (FDA), *p-*Phenylenediamine (PPDA), *m*-Phenylenediamine (MPDA), *m*-Xylylenediamine, *p*-Xylylenediamine, 2,2'-Bis(trifluoromethyl)benzidine (TFMB);
III. ether diamines, such as 2,2-Bis[4-(4-aminophenoxy)phenyl]propane (BAPP), 2,2-Bis[4-(4-aminophenoxy)phenyl]hexafluoropropane, 4,4'-Oxydianiline (ODA), 4,4'-Bis(4-aminophenoxy)biphenyl;
IV. sulfonyl diamines, such as 3,3'-Sulfonyldianiline;
V. mixed, aliphatic-aromatic diamines, such as 4,4'-((Cyclohexane-1,1-diylbis(4,1-phenylene))bis(oxy))dianiline, 4,4'-(((4-Methylcyclohexane-1,1-diyl)bis(4,1-phenylene))bis(oxy))dianiline, Bis[4-(4-aminobenzyl)phenyl] methane, 1,1-Bis[4-(4-aminobenzyl)phenyl] cyclohexane, 3,3'-Methylenedianiline, 4,4'-Methylenedianiline; or
VI. a combination of two or more of the compounds of same or different kind, according to the groups I., II., III., IV. and V.;
b) the at least one acid compound is a polycarboxylic acid or a polycarboxylic anhydride, preferably selected from the group consisting of
i. aromatic tricarboxylic polyacids and anhydrides, such as 3,4,4'-(Benzophenone)tricarboxylic anhydride (BTDA), trimellitic acid, trimellitic anhydride, phenylether tricarboxylic acid anhydride;
ii. aromatic tetracarboxylic polyacids and anhydrides, such as 3,3'-4,4'-(Benzophenone)tetracarboxylic anhydride (BTDA), 4,4'-(Hexafluoroisopropylidene)diphthalic anhydride (6-FDA), Pyromellitic dianhydride (PMDA), 4,4'-Oxydiphtalic anhydride (ODPA), 3,3',4,4'-Biphenyltetracarboxylic dianhydride (BPDA), 3,3',4,4'-Diphenylsulfonetetracarboxylic dianhydride (DSDA), Hydroquinone diphthalic anhydride (HQDA), 4,4'-(4,4'-Isopropylidendiphenoxy) bis(phthalic anhydride);
iii. aliphatic tetracarboxylic polyacids and anhydrides, such as Cyclobutane-1,2,3,4-tetracarboxylic dianhydride (CBDA), 3,3',4,4'-Bicyclohexyl tetracarboxylic dianhydride;
iv. iv. mixed, aliphatic-aromatic polyacids and anhydrides, such as Ethylene glycol bis(4-trimellitate anhydride); or
v. a combination of two or more of the compounds of same or different kind, according to the groups i., ii., iii. and iv.;
c) the substrate is selected from the group consisting of polyamide, polyimide, polyaramid, polytetrafluoroethylene, glass, metal, ceramics, Polyethyleneimine (PEI), Polyether ether ketone (PEEK);
or a combination of two or more of these features.

10. The process of any of the preceding claims, wherein the polyimide layer has at least one of these features:
i) A thickness of at least 20 nm;
ii) A weight average molecular weight in the range from 5'000 to 1'000'000 g/mol;
iii) An ultimate tensile strength of 5 MPa or more, for example of 10 MPa or more, or 20 MPa or more, each determined according to ASTM D-882-91;
iv) Or a combination of two or more features according to i) to iii).

11. A kit comprising a first and a second composition, wherein
the first composition comprises an acid compound and a first organic carrier; and
the second composition comprises a diamine compound and a second organic carrier.

12. The kit of claim 11, wherein
the amount of the acid compound in the first composition is in the range of from 1 to 25 wt.%, the wt.% with respect to the total weight of the first composition; and th
e amount of the diamine compound in the second composition is in the range of from 1 to 25 wt.%, the wt.% with respect to the total weight of the second composition.

13. A composite comprising a layer of polyimide and a substrate obtainable by a process according to any one of claims 1 to 10.

14. The composite of claim 13, wherein the layer has at least one of these features:
i) A thickness of at least 20 nm;
ii) A weight average molecular weight in the range from 5'000 to 1'000'000 g/mol;
iii) An ultimate tensile strength of 5 MPa or more, for example of 10 MPa or more, or 20 MPa or more, each determined according to ASTM D-882-91.

15. A use of a kit comprising a first and a second composition, each comprising an organic carrier, to manufacture a polyimide layer having a pattern, wherein the first composition comprises at least an acid compound and the second composition comprises at least a diamine compound.
